# EUROPEAN PATENT APPLICATION

(11) **EP 0 767 338 A2**
(43) Date of publication of application: **09.04.1997**
(21) Application number: 96307234.3
(22) Date of filing: 03.10.1996
(51) Int. Cl.: F17C 1/00, B60K 15/03

(54) **High pressure storage vessel**

(30) Priority: 06.10.1995 US 540266
(71) Applicant: MORTON INTERNATIONAL, INC., Chicago, Illinois 60606 (US)
(72) Inventor: Smith, Bradley W., Ogden, Utah 84401 (US)
(74) Representative: Bankes, Stephen Charles Digby

(57) **Abstract**

A high pressure storage vessel (10) for compressed natural gas (CNG) or liquid propane gas (LPG) fuel for a vehicle. The vessel (10) includes two identical coiled tubular tanks (12) each wound in a flat spiral. The tubes may have a circular cross-section and have outer end walls (20) joined via fittings (26) an a conduit (28). The tubular tanks are rotationally aligned and held in an abutting parallel relationship by four equally spaced plates or straps (30) which are connected to and extend between the tubular tanks (12).

## Description

This invention relates generally to high pressure storage vessels. While the invention may find utility in many other applications, the ensuing discussion will be facilitated by particular reference to a fuel tank for use in vehicles with high pressure fuel systems.

Currently, the majority of automotive vehicles use liquid fuels, such as gasoline, or gasoline/ethanol mixtures, which are stored at ambient pressure. It has long been known that compressed natural gas (CNG), such as methanol, or liquid propane gas (LPG) may be used as alternatives to gasoline. Often, these may be substituted as a fuel for most automotive vehicle internal combustion engines with relatively small modifications to the fuel introduction and fuel burning systems thereof.

It is also known that such natural gas or propane gas products are generally "cleaner" than gasoline fuels, that is, they produce fewer objectionable byproducts or pollutants. Thus, considering the many millions of vehicles in use today, extending the use of natural gas or propane fuels to a great number of vehicles would result in a great reduction in objectionable emissions. Such reduction in emissions might also realize savings in that it could possibly enable the elimination of the relatively expensive catalytic converter systems which are widely used for emissions control presently in a majority of automotive vehicles sold in the United States.

However, one drawback to the use of such compressed natural gas or liquid propane fuels is the requirement that they be stored under relatively high pressures, in order to store a meaningful quantity within a reasonable volume. This requirement has generally resulted in such fuels being supplied in elongated cylinders with rounded ends, in order to present reliable pressure carrying containers.

In the case of low pressure liquid fuel systems such as gasoline, the fuel tank may be of almost any desired shape. Thus, the fuel tank may be designed relative to the vehicle to occupy available space, and need not take up space required or desired for other vehicle components such as storage space, trunk space or the like. Typically, such gasoline tanks are more or less rectilinear in shape and are designed to be of a height such that they readily fit beneath the trunk or load floor, as the case may be, of most automotive vehicles, with a filler tube or neck extending to a convenient externally accessible point on the vehicle.

In contrast, conventional cylindrical shaped natural gas or propane gas tanks are relatively bulky and, as such, have typically been installed in the trunk of a vehicle, thus taking up much of the available storage space. For example, in order to provide approximately 483 km (300 mls) of driving range for a relatively small automobile [about 10.6 km/l (30 mpg)], it is estimated that about 33.6 m³ (1200 SCF) capacity would be required for a natural gas tank [based on 0.92 m³/l (124 SCF/gal)]. Commercially available steel natural gas tanks having about this capacity include the following: 1) one tank about 38 cm (15 in) diameter by 188 cm (74 in) long [at 20.7 MPa (3000 psi)]; 2) one tank about 41 cm (16 in) diameter by 132 cm (52 in) long [(at 24.8 MPa (3600 psi)]; 3) two tanks, each about 27 cm (10¾ in) diameter by 129 cm (50 ¾ in) long [at 24.8 MPa (3600 psi)]. Of course multiple smaller tanks could also be used, resulting in the ability to distribute the capacity differently; however, the cost of such multiple tanks would typically be much more than that of one or two tanks.

Moreover, the materials (typically steel) and the wall thickness required for such a high pressure application are such that such tanks are relatively heavy, even when empty. For example, the tanks in example 3) above weigh 89 kg (195 lbs) each, constructed of stainless steel. The tank in example 1) above is constructed of a lightweight composite material, e.g. carbon fiber, and weighs about 119 kg (262 lbs). The tank in example 2) is of an even lighter weight composite material and weighs about 54 kg (118 lbs). However, these latter composite tanks are significantly more expensive than comparable steel tanks. Typically, much thinner walls may be utilized in forming conventional gasoline tanks for vehicles, such that conventional tanks typically weigh significantly less than CNG tanks, and are also typically significantly less expensive to construct.

Accordingly, it is a general object of the invention to provide a novel and improved high pressure storage vessel, such as a fuel tank for use in vehicles with high pressure fuel systems.

A further object is to provide such a fuel tank which overcomes many of the problems associated with prior art high pressure fuel tanks as described above.

A further object is to provide such a fuel tank which also will fit within a space similar to that occupied by a gasoline tank in an automotive vehicle.

A related object is to provide such a fuel tank which weighs substantially less than prior art high pressure fuel tanks constructed of like material.

Yet a further object is to provide such a fuel tank which offers a relatively low cost, easily packaged alternative to the above-described prior art high pressure fuel tanks.

Briefly, and in accordance with the foregoing objects, a high pressure storage vessel comprises an elongated tubular member having a side wall defining a longitudinal axis and a closed curve in cross-section, and two end walls continuous with said side wall and respectively located at opposite longitudinal ends thereof; said longitudinal axis being many times greater in length than said cross-sectional dimensions; said side wall being formed in a wrapped-around configuration such that said longitudinal axis thereof defines a curve located in a single plane and winding about a central axis perpendicular to said plane, one of said end walls being located at an inner end of said curve and one of said end walls being located at an outer end of said curve.

The features of the present invention which are believed to be novel are set forth with particularity in the appended claims. The organization and manner of operation of the invention, together with further objects and advantages thereof, may best be understood by reference to the following description, taken in connection with the accompanying drawings in which like reference numerals identify like elements, and in which:
Fig. 1 is a top plan view of a spiral fuel tank in accordance with the invention;
Fig. 2 is an elevation of the fuel tank of Fig. 1; and
Fig. 3 is a sectional view taken generally along the line 3-3 of Fig. 1.

Referring now to the drawings, a high pressure storage vessel in accordance with the invention will be shown and described herein embodied in a fuel tank for use in vehicles with high pressure fuel systems and designated generally by the reference numeral 10. In the illustrated embodiment a pair of substantially identical tanks 12 and 14 are joined together to form a composite tank 10. It will be understood that a single such tank or more than two such tanks may be similarly employed if desired, depending upon the desired fuel capacity. In the illustrated embodiment, the fuel capacity is approximately 33.6 m³ (1200 SCF) of compressed natural gas (CNG), that is, approximately 16.8 m³ (600 SCF) for each of the fuel tanks 12 and 14. The fuel tank 12 will be described in additional detail, it being understood that the fuel tank 14 is preferably identical.

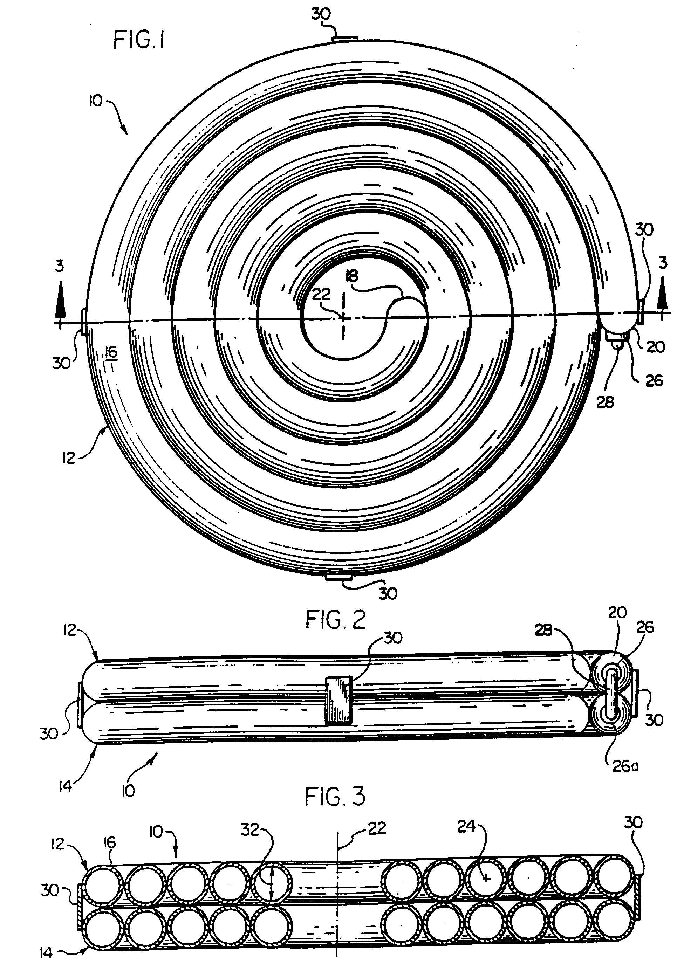

The fuel tank 12 comprises an elongated tubular member having a side wall 16 which defines a central longitudinal axis of the tubular member or tank 12 and which wall 16 also defines a closed curve in cross-section. Referring to Fig. 3, it will be seen that in the illustrated embodiment, this closed curve cross-section comprises a circle. The two end walls 18 and 20 are substantially continuous with the side wall 16 and are located at opposite longitudinal ends thereof. The longitudinal axis defined by the tubular side wall 16 is many times longer than its cross-sectional dimension, or diameter, in the illustrated embodiment. Preferably, the tank 12 is formed of a steel material, however, other materials, including ferrous and non-ferrous, as well as composite materials may be utilized without departing from the invention.

In accordance with the invention, the tubular member or side wall 16 is formed in a wound or wrapped configuration such that the longitudinal axis thereof defines a curve located in a single plane and winding about a central axis 22 which is perpendicular to this plane. In the illustrated embodiment, this curve is a spiral, however, other shapes (oval, oblong, etc. or even irregular shapes) may be used in order to permit the tank to fit in variously shaped areas. The longitudinal axis is best viewed in cross-section in Fig. 3, as indicated by reference numeral 24, and runs through the center of each of the circular cross-sections illustrated in Fig. 3.

The formation of the tubular member or side wall 16 in a spiral as thus defined results in the end wall 18 being located at an inner end of the spiral and the end wall 20 being located at an outer end of the spiral. In the illustrated embodiment, the outer end wail 20 is shown provided with an appropriate fitting diagrammatically illustrated at 26 and a small tubular conduit 28 for joining the fitting 26 with a like fitting 26a on the second tank or tubular member 14.

In the illustrated embodiment, means for joining the two tanks 12 and 14 together are illustrated as four relatively thin generally rectangular plates or straps 30 which are located at spaced intervals about the outer peripheries of the respective tanks 12 and 14 and are fixed thereto by suitable means such as welding. In the illustrated embodiment, these joining members are located substantially spaced by 90° of arc about the outer periphery of the spiral defined by the respective tanks 12 and 14. The two tanks 12 and 14 are aligned with each other and the joining members are applied thereto, such that the respective longitudinal axes of the two tanks 12 and 14 are generally parallel and spaced apart and, such that the tanks are in side-by-side abutting relation with the spiral axes thereof coaxially aligned.

In addition, the alignment between the two tanks 12 and 14 is such that the respective inner end walls are aligned with each other and consequently, the respective outer end walls are also aligned with each other. Also in the illustrated embodiment, it will be seen that each of the tanks 12 and 14 extends about a number of turns of the spiral defined thereby. It should be noted that the two tanks need not be so aligned, but may be offset or rotated to different relative positions, if desired to meet different space requirements. Different means of joining the tanks together may also be used without departing from the invention. Moreover, a composite storage vessel comprised of three or more such tanks may also be constructed in accordance with the invention. It should be further noted that two or more tanks of differing shape (e.g. spiral, oval, etc.) may be combined to form a composite storage vessel without departing from the invention.

In practice, the inner diameters 32 as well as the overall length and consequently number of turns, required of each of the tanks 12 and 14 may be calculated by determining the capacity or volume desired for each tank. In the example mentioned hereinabove, the desired capacity or volume of the two tanks together is approximately 33.6 m³ (1200 SCF). Typically, compressed natural gas is provided at a pressure of either 20.7 or 24.8 MPa (3000 or 3600 psi). At 24.8 MPa (3600 psi) the compressibility factor is approximately 293. Thus, 33.6 m³ (1200 SCF) at 24.8 MPa (3600 psi) comes to approximately 0.1147 m³ (7000 in³). Selecting a diameter 32 of 9 cm (3.5 in) gives a required overall length of approximately 1849 cm (728 in), or 924 cm (364 in) for each of the two tanks 12 and 14, using the formula volume = Π:r² length.

Using a safety factor of 2.25 at 24.8 MPa (3600 psi) and an ultimate material strength of 827 MPa (120,000 psi), the wall thickness of the walls 16 comes out to approximately 0.12 mm (.120 in), using the formula 120,000/2.25 = 3600r/t, where t is wall thickness and r is the internal diameter 9 cm (3.5 in) divided by 2. As shown in Fig. 1, the wrapping of this tube in a spiral results in five full 360° turns of the spiral. Thus, the composite tank comprising the tanks 12 and 14 is approximately 19 cm (7.5 in) in height and 109 cm (43 in) in diameter. Advantageously, these dimensions may permit ready mounting of such a tank within a space normally provided for conventional gasoline tanks is an automotive vehicle, such as under a load floor or trunk floor of the like. Thus, the tanks according to the invention need not take up other space in the vehicle such a trunk space or the like.

It has been calculated that, constructed of a stainless steel material [using a weight factor of 7.8 g/cm³ (.283 lbs/in³)], the two tanks 12 and 14 of the above- described dimensions will weigh in the order of 128 kg (281 lbs). This compares favourably with the 177 kg (390 lbs) approximated above for more conventional CNG steel cylinders [two at 89 kg (195 lbs) each]. Therefore substantial weight reduction is also achieved by the invention, without resorting to relatively expensive composite materials, such as carbon fiber.

## Claims

1. A high pressure storage vessel (10) comprising: at least a first elongated tubular member (12) having a side wall (16) defining a longitudinal axis (24) and a closed curve in cross-section, and two end walls (18, 20) continuous with said side wall and respectively located at opposite longitudinal ends thereof; said longitudinal axis (24) being a plurality of times greater in length than overall dimensions of said cross-section; said side wall (16) being formed in a curved, winding configuration such that said longitudinal axis (24) thereof defines substantially a curve wound in a single plane about a central axis (22) perpendicular to said plane, one of said end walls (18) being located at an inner end of said curve and one of said end walls (20) being located at an outer end of said curve.

2. The vessel (10) of claim 1, wherein said curve is a spiral.

3. The vessel (10) of claim 1 or 2 wherein said tubular member (12) extends about a plurality of turns of the curve defined by the longitudinal axis (24) thereof.

4. The vessel of claim 2 or 3 wherein said sidewall (16) defines a circle in cross-section.

5. The vessel of any preceding claim wherein said longitudinal axis (24) is many times greater in length than overall dimensions of said cross-section.

6. The vessel (10) of any preceding claim including two such elongated tubular members (12, 14) respectively constituting a first (12) and a second (14) elongated tubular member wherein said second elongated tubular member (14) is mounted in side-by-side abutting relation with the first elongated tubular member (12) such that the longitudinal axes (24) thereof define spaced apart, parallel planes.

7. The vessel (10) of claim 6 further including joining means (30) for holding the two tubular member (12, 14) together in said side-by-side abutting relation with the central axes (22) thereof coaxial; and fuel conduit means (28) communicating between the first (12) and second (14) elongated tubular members.

8. The vessel (10) of claim 7 wherein said joining means (30) comprise a plurality of joining members (30) located at radially spaced apart locations about radially outer surfaces of the respective tubular members (12, 14) and coupled therewith to hold the tubular members together with the planes defined by the longitudinal axes (24) thereof parallel and spaced apart.

9. The vessel (10) of claim 7 or 8 wherein said joining means (30) hold said tubular members (12, 14) aligned with each other such that the inner and outer end walls (18, 20) of the first tubular member (12) are respectively aligned with the inner and outer end walls (18, 20) of the second tubular member (14).

10. The vessel (10) of claim 7, 8 or 9 wherein the outer end walls (20) of each tubular member (12, 14) are provided with a fitting (26) and wherein said fuel conduit means (28) are coupled between the respective fittings (26).

11. The vessel (10) of any one of claims 6 to 10 wherein said second elongated tubular member (14) is substantially identical in said configuration to the first elongated tubular member (12).
